Europäisches Patentamt

(19) European Patent Office

Office européen des brevets

(11) Publication number: **0 067 858**

**B1**

(12) **EUROPEAN PATENT SPECIFICATION**

(45) Date of publication of patent specification: **10.04.85**

(51) Int. Cl.⁴: **C 08 K 3/08,** C 09 D 5/38,
C 08 K 5/06

(21) Application number: **82900470.4**

(22) Date of filing: **21.12.81**

(86) International application number:
**PCT/US81/01707**

(87) International publication number:
**WO 82/02393 22.07.82 Gazette 82/18**

(54) **ALUMINUM FLAKE DISPERSIONS.**

(30) Priority: **31.12.80 PCt/us80/01759**

(43) Date of publication of application:
**29.12.82 Bulletin 82/52**

(45) Publication of the grant of the patent:
**10.04.85 Bulletin 85/15**

(84) Designated Contracting States:
**BE DE FR GB NL**

(56) References cited:
**US-A-3 318 716**
**US-A-3 857 852**
**US-A-3 988 160**
**US-A-4 026 710**
**US-A-4 139 576**
**US-A-4 213 886**
**US-A-4 287 112**
**US-H- 988 008**

(73) Proprietor: **E.I. DU PONT DE NEMOURS AND COMPANY**
**1007 Market Street**
**Wilmington Delaware 19898 (US)**

(72) Inventor: **HUYBRECHTS, Jozef Theresia**
**Van der Bekenlaan 46**
**B-2360 Oud Turnhout (BE)**

(74) Representative: **Abitz, Walter, Dr.-Ing. et al**
**Abitz, Morf, Gritschneder P.O. Box 86 01 09**
**D-8000 München 86 (DE)**

Courier Press, Leamington Spa, England.

EP 0 067 858 B1

## Description

Background

Dispersions of aluminum flake have been made in mixtures of kerosene and ethylene glycol monobutyl ether and other petroleum distillates such as "Solvesso 150" from Exxon Chemicals Co. for use with solvent-based dispersions of poly(arylene sulfide) such as poly(phenylene sulfide) (PPS) and known fluorocarbon polymers such as polytetrafluoroethylene (PTFE) and copolymers of tetrafluoroethylene and hexafluoropropylene (FEP). Such solvent-based dispersions are quite suitable for spray application, but they can exhibit less than desirable settling and flow characteristics for application by coil coating techniques.

Summary of the invention

The present invention provides a dispersion of aluminum flake in a mixture of ethylene glycol and ethylene glycol monobutyl ether.

Preferably, each of the ethylene glycol and ethylene glycol monobutyl ether are present in amounts of about 40—60% by weight of the two combined; more preferably at levels of about 55% ethylene glycol, 45% ethylene glycol monobutyl ether.

The invention also provides for using such dispersions of aluminum flakes in solvent-based dispersions of poly(phenylene sulfide) and optionally particulate fluorocarbon resin, preferably PTFE or FEP.

Detailed description

By changing the solvent mix and substituting ethylene glycol for kerosene in the prior art, the stability and flow characteristics of coating compositions of the invention are improved to an extent desirable for coil coating. The advantages of the invention are especially noticeable in the wetting of the aluminum flake and the production of stable dispersions in polyphenylene sulfide.

The invention will now be illustrated by an example. Parts, percentages and proportions herein are by weight except where indicated otherwise.

Example
Solvent-Based 66.6. PPS/16 FEP/12.75 TiO$_2$/3.65 Al Flake

Prepare a premix by grinding in a pebble mill for 48 hours or grinding in a Dyno-mill for 5 passes a blend of

| | |
|---|---|
| "Ryton" V—I PPS resin from Phillips Petroleum Co. | 22.16 |
| FeP powder from Du Pont | 5.65 |
| "Tipure R900" TiO$_2$ pigment from Du Pont | 4.24 |
| "Triton X-100" from Rohm & Haas (isooctylphenoxy-polyethoxyethanol) | 6.14 |
| Channel Black (carbon colorant) | 2.00 |
| Cobalt blue pigment | 0.05 |
| Ethylene glycol | 32.62 |
| Ethylene glycol monobutyl ether | 26.69 |
| | 100.00 |

This premix is then mixed in the following proportions:

| | |
|---|---|
| Premix | 96.44 |
| Aluminum flake | 1.78 |
| Blend of 55 parts ethylene glycol and 45 parts ethylene glycol mono-butyl ether | 1.78 |
| | 100.00 |

The coating composition has satisfactory dispersion stability and has desirable viscosity and flow characteristics for application to coiled substrate of any suitable material such as aluminum by suitable techniques such as doctor blade or rolling coating. The coating can be cured by heating 10 minutes at 400°C. This drivess off the liquid carrier and coalesces into a desirable coating. Alternately, the coating can be cured at 370°C for 15 minutes, at 425°C for 5—7 minutes or under equivalent conditions.

**Claims**

1. A dispersion of aluminum flakes in a mixture of ethylene glycol and ethylene glycol monobutyl ether wherein each of the ethylene glycol and ethylene glycol monobutyl ether are present in amounts of about 40—60% by weight of the two combined.

2. The dispersion of claim 1 wherein the proportions are, by weight, about 55% ethylene glycol and 45% ethylene glycol monobutyl ether.

3. A solvent-based dispersion of poly(phenylene sulfide) containing a dispersion of claim 1.

4. The solvent-based dispersion of claim 3 also containing fluorocarbon resin in particulate form.

5. The solvent-based dispersion of claim 4 wherein the fluorocarbon resin is polytetrafluoroethylene.

6. The solvent-based dispersion of claim 4 wherein the fluorocarbon resin is a copolymer of tetrafluoroethylene and hexafluoropropylene.

**Patentansprüche**

1. Eine Dispersion von Aluminumflocken in einem Gemisch von Ethylenglykol und Ethylenglykolmonobutylether, worin jedes der beiden, Ethylenglykol und Ethylenglykolmonobutylether, in Mengen von etwa 40 bis 60% von Gesamtgewicht der beiden enthalten ist.

2. Die Dispersion von Anspruch 1, in der etwa 55 Gew. % Ethylenglykol und 45 Gew. % Ethylenglykolmonobutylether enthalten sind.

3. Ein auf Lösungsmittel basierende Dispersion von Poly(phenylensulfid), enthaltend eine Dispersion nach Anspruch 1.

4. Die auf Lösungsmittel basierende Dispersion von Anspruch 3, die ausserdem Fluorkohlenstoffharz in feinteiliger Form enthält.

5. Die auf Lösungsmittel basierende Dispersion von Anspruch 4, worin das Fluorkohlenstoffharz Polytetrafluorethylen ist.

6. Die auf Lösungsmittel basierende Dispersion von Anspruch 4, worin das Fluorkohlenstoffharz ein Copolymeres von Tetrafluorethylen und Hexafluorpropylen ist.

**Revendications**

1. Une dispersion de paillettes d'aluminium dans un mélange d'éthylène-glycol et d'éther monobutylique d'éthylène-glycol dans lequel l'éthylène-glycol et l'éther monobutylique d'éthylène-glycol sont chacun présents à raison d'environ 40—60% du poids des deux combinés.

2. La dispersion de la revendication 1, dans laquelle les proportions sont, en poids, d'environ 55% d'éthylène-glycol et 45% d'éther monobutylique d'éthylène-glycol.

3. Une dispersion à base de solvant de poly(sulfure de phénylène) contenant une dispersion selon la revendication 1.

4. La dispersion à base de solvant de la revendication 3, qui contient aussi une résine de fluorocarbure sous forme de particules.

5. La dispersion à base de solvant de la revendication 4, dans laquelle la résine de fluorocarbure est du polytétrafluoroéthylène.

6. La dispersion à base de solvant de la revendication 4, dans laquelle la résine de fluorocarbure est un copolymère de tétrafluoroéthylène et d'hexafluoropropylène.